# EUROPÄISCHE PATENTSCHRIFT

(11) **EP 1 500 459 B1**
(45) Veröffentlichungstag und Bekanntmachung des Hinweises auf die Patenterteilung: **16.07.2008**
(21) Anmeldenummer: 03016736.5
(22) Anmeldetag: 22.07.2003
(51) Int. Cl.: B23K 26/02, B23K 26/04, G01B 7/02

(54) **Düse für Laser-Schneidmaschine**
Nozzle for laser cutting machine
Tuyère pour machine à couper au laser

(43) Veröffentlichungstag der Anmeldung: 26.01.2005
(73) Patentinhaber: TRUMPF Werkzeugmaschinen GmbH + Co. KG, 71254 Ditzingen (DE)
(72) Erfinder: Weick, Jürgen-Michael, 71679 Asperg (DE); Mienhardt, Uwe, 70825 Korntal-Münchingen (DE)
(74) Vertreter: Kohler Schmid Möbus

(56) Entgegenhaltungen:
- DE-A- 4 133 198
- DE-U- 9 004 335
- JP-A- 3 198 993

## Beschreibung

Die Erfindung betrifft eine Laserbearbeitungsdüse gemäß dem Oberbegriff des Anspruchs 1.

Eine derartige Laserbearbeitungsdüse ist beispielsweise durch die JP-A-03 198 993 bekannt geworden.

Beim Laserschneiden von Blech mit hoher Geschwindigkeit kommt es an der Werkstückoberfläche zur Plasmabildung, welche mit dem Schnellschneidprozess gekoppelt ist und die Enegieeinbrinung in den Prozess verbessert. Das Plasma stört ab einer gewissen Stärke die Abstandsregelung des Laserbearbeitungskopfs zum Werkstück. Dadurch regelt die kapazitive Höhenregelung auf einen falschen Abstand, woraus sich Fehler in der Materialbearbeitung ergeben.

Fehler bei der Abstandsregelung beim Laserschneiden mit hoher Geschwindigkeit müssen möglichst vermieden werden, wenn die eng um den Schnittspalt begrenzte Ausdehnung des Plasmas genutzt wird.

Um die Störung des Abstandsregelungssignals zu unterbinden, wird ein elektrisch isolierender Werkstoff (vorzugsweise Keramik) in die Düsenbohrung eingesetzt. Es sind unterschiedliche Werkstoffe zur Isolierung geeignet, wie beispielsweise Kunststoff, Keramik oder dergleichen. Ein dem Bereich der Laserbearbeitung zugewandter Grundkörperabschnitt des Düsengrundköpers besitzt eine auf den Bearbeitungsbereich ausgerichtete elektrische Isolation, so dass im Wesentlichen der dem Prozessplasma ausgesetzte Bereich der Laserbearbeitungsdüse elektrisch isoliert wird.

Die aus JP - A - 03198993 bekannten Laserbearbeitungsdüse weist eine elektrisch isolierende Beschichtung auf. Die Herstellung der Beschichtung ist aufwendig und nicht austauschbar. Weiterhin muß die Beschichtung auf die Komponente 12a abgestimmt sein, damit diese entsprechend eingesetzt werden kann. Dies führt zu einer aufwendigen Montage. Daher liegt der Erfindung die Aufgabe zugrunde, die Montage der Komponenten zu vereinfachen. Diese Aufgabe wird durch die Laserbearbeitungsdüse gemäß dem Patentanspruch 1 gelöst.

Das Einsetzen ist durch die Ausbildung der Isolation als Buchse leicht möglich.

Da der Werkstoff der Buchse beim Schneiden durch zurückreflektierte Strahlung abgetragen werden kann, ist bei einer Weiterbildung der Erfindung vorgesehen, dass in die keramische Buchse noch ein zur Abschirmung der Rückstrahlung geeigneter metallischer Einsatz vorzugsweise als Innendüse aus Kupfer eingesetzt wird. Die Innendüse sorgt dafür, dass keine Strahlung aus dem Prozess auf den Isolator treffen kann. Sie muss zur eigentlichen Düse einen Isolationsabstand besitzen, welcher zum Beispiel 1 mm betragen kann. Mit dieser Ausführung wird die Abstandsregelung nicht mehr gestört und der Isolationseinsatz vor dem zerstörenden Starhlungsangriff geschützt. Der Schnellschneidprozess kann ohne Schneidfehler, die durch einen falschen Schneidabstand bedingt sind, erfolgen. An Stelle der Innendüse ist auch eine Beschichtung oder dünne Schutzschicht denkbar. Beispielsweise kann eine Metallisierung aus Kupfer vorgesehen sein.

Laserbearbeitungsdüse, Buchse und Innendüse können durch eine bloße Presspassung gefügt, eingeklebt oder durch leichte Verformung, bei der Material in die vorgesehenen Freisparungen fließt, verprägt werden. Weiterhin denkbare Verbindungen sind ein Gewinde, eine Lötung zwischen Metall und Keramik sowie eine Schweißverbindung.

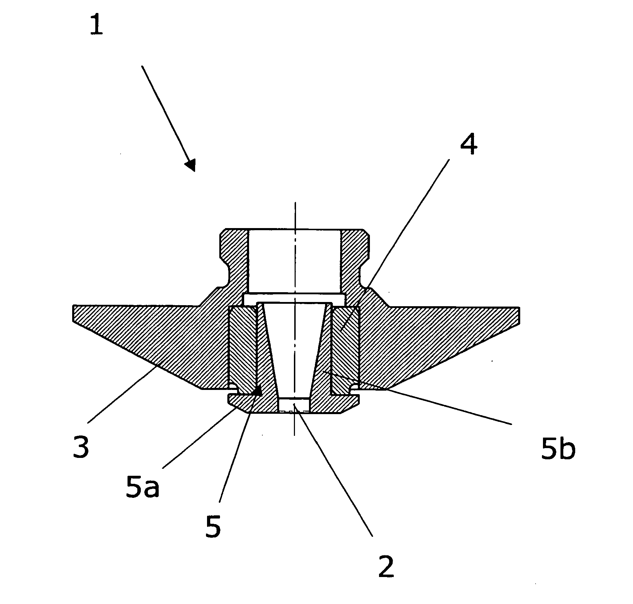

Ein Ausführungsbeispiel der Erfindung ist in der Zeichnung schematisch dargestellt und wird nachfolgend mit Bezug zu Figuren der Zeichnung näher erläutert. Die Figur zeigt einen Längsschnitt einer Laserbearbeitungsdüse.

Aus der **Figur** ist der Aufbau einer Laserbearbeitungsdüse **1** ersichtlich, welche zum Hochgeschwindigkeitsschneiden mittels Laserstrahlung geeignet ist. Die Laserstrahlung tritt aus einer Düsenöffnung **2** aus und trifft zur Bearbeitung auf ein Werkstück, beispielsweise aus Baustahl. Während der Laserbearbeitung kommt es zu einer Plasmabildung an der Werkstückoberfläche des zu bearbeitenden Werkstücks. Ebenso können sich Partikel von der Werkstückoberfläche ablösen. Weiterhin wird auch Laserstrahlung an der Werkstückoberfläche reflektiert.

Die Laserbearbeitungsdüse 1 weist einen an weiteren Bauteilen des Laserbearbeitungskopfes zu halternden Düsengrundkörper **3** aus einem elektrisch leitenden Material, wie beispielsweise Kupfer, auf. Die elektrische Leitfähigkeit des Düsengrundkörpers 3 ist erforderlich, weil dieser Teil einer an sich beispielsweise durch die DE 90 04 335 U1 bekannten Prinzips einer Abstandsregelung ist. Mit der Abstandsregelung wird der Abstand der Laserbearbeitungsdüse 1 zum Werkstück kapazitiv ermittelt. Ein im Unterteil des Laserbearbeitungskopfs integrierter HF-Oszillator ändert seine Frequenz in Abhängigkeit vom Messabstand. Das Frequenzsignal wird an eine Steuereinrichtung bzw. an ein Auswertesystem übertragen und digital ausgewertet. Dabei wird über eine vorab aufgenommene Kennlinie aus der Frequenz der Abstand ermittelt. Dadurch kann der Abstand der Laserbearbeitungsdüse zum Werkstück konstant gehalten werden. Die Laserbearbeitungsdüse kann der Kontur der Werkstückoberfläche nachfahren. Kollisionen zwischen Laserbearbeitungskopf und Werkstück werden vermieden. Darüber hinaus kann mit der Abstandsregelung die Lage des Werkstücks mit einer Genauigkeit von ca. 2,5 mm ermittelt werden, so dass nachträgliches Verschieben zum genauen Ausrichten entfällt.

Auftretende Plasmabildung führt dazu, dass die Signalerzeugung zur Abstandsregelung beeinflusst wird. Aus diesem Grund ist eine elektrische Isolation der Laserbearbeitungsdüse 1 am dem Werkstück zugewandten Grundkörperabschnitt der Laserbearbeitungsdüse 1 vorgesehen. Die Isolation ist durch eine Buchse **4** aus einem Isolator, beispielsweise aus einem keramischen Werkstoff, ausgebildet. An der Innenseite der Buchse 4 ist eine Abschirmung als Strahlungsschild vorgesehen, welche die Buchse 4 vor reflektierter Laserstrahlung bzw. vor einer zu starken, die Buchse 4 zerstörenden Wärmestrahlung oder der aus dem Plasma übertragenen Wärme schützt. Die Abschirmung ist durch eine Innendüse oder Düsenspitze **5** aus Metall, beispielsweise aus Kupfer, verwirklicht. Die Innendüse 5 umfasst eine nach innen abschirmende Wandung **5a** und einen nach unten abschirmenden Rand **5b**.

### BEZUGSZEICHENLISTE

- 1: Laserbearbeitungsdüse
- 2: Düsenöffnung
- 3: Düsengrundkörper
- 4: Buchse
- 5: Innenhülse
- 5a: Wandung
- 5b: Rand

## Patentansprüche

1. Laserbearbeitungsdüse (1) mit einem als Teil einer Abstandsregelung verwendbaren Düsengrundkörper (3) aus einem elektrisch leitfähigen Material, wobei ein dem Bereich der Laserbearbeitung zugewandter Grundkörperabschnitt des Düsengrundköpers (3) eine elektrische Isolation (4) besitzt, , **dadurch gekennzeichnet, dass** die elektrische Isolation durch eine in die Düsenöffnung (2) einsetzbare Buchse (4) ausgebildet ist.

2. Laserbearbeitungsdüse nach Anspruch 1, **dadurch gekennzeichnet, dass** die elektrische Isolation aus einem keramischen Material besteht.

3. Laserbearbeitungsdüse nach einem der vorhergehenden Ansprüche, **dadurch gekennzeichnet, dass** an einer der Laserstrahlung zugewandten Innenseite der elektrischen Isolation (4) eine Abschirmung für Laserstrahlung angeordnet ist.

4. Laserbearbeitungsdüse nach Anspruch 3, **dadurch gekennzeichnet, dass** die Abschirmung durch eine Innenhülse (5) oder durch eine Metallisierung verwirklicht ist.

5. Laserbearbeitungsdüse nach Anspruch 3 oder 4, **dadurch gekennzeichnet, dass** die Abschirmung aus Metall besteht.

6. Laserbearbeitungsdüse nach einem der vorhergehenden Ansprüche, **dadurch gekennzeichnet, dass** die elektrische Isolation (4) formschlüssig in die Laserbearbeitungsdüse (1) einsetzbar ist.

7. Laserbearbeitungsdüse nach einem der vorhergehenden Ansprüche, **dadurch gekennzeichnet, dass** die Abschirmung (5) formschlüssig auf die Innenseite der elektrischen Isolation (4) in die Laserbearbeitungsdüse (1) einsetzbar ist.

## Claims

1. Laser processing nozzle (1) having a nozzle base body (3) made of an electrically conductive material, which is usable as part of a spacing control system, wherein a base body portion of the nozzle base body (3) towards the laser processing region has an electrical insulation (4), **characterised in that** the electrical insulation is formed by a bushing (4) which is insertable into the nozzle opening (2).

2. Laser processing nozzle according to claim 1, **characterised in that** the electrical insulation consists of a ceramic material.

3. Laser processing nozzle according to one of the preceding claims, **characterised in that**, on an inside of the electrical insulation (4) towards the laser radiation, a shield for laser radiation is arranged.

4. Laser processing nozzle according to claim 3, **characterised in that** the shield is implemented in the form of an inner sleeve (5) or by metal plating.

5. Laser processing nozzle according to claim 3 or 4, **characterised in that** the shield consists of metal.

6. Laser processing nozzle according to any one of the preceding claims, **characterised in that** the electrical insulation (4) is insertable into the laser processing nozzle (1) in a form-fit.

7. Laser processing nozzle according to any one of the preceding claims, **characterised in that** the shield (5) is insertable into the laser processing nozzle (1) in a form-fit on the inside of the electrical insulation (4).

## Revendications

1. Buse d'usinage par laser (1) avec un corps de base de buse (3) en matériau électroconducteur utilisable comme élément d'une régulation d'écartement, une portion de corps de base du corps de base de buse (3) tournée vers la zone de l'usinage par laser possédant une isolation électrique (4), **caractérisée en ce que** l'isolation électrique est réalisée par une douille (4) insérable dans l'ouverture de buse (2).

2. Buse d'usinage par laser selon la revendication 1, **caractérisée en ce que** l'isolation électrique est constituée d'un matériau céramique.

3. Buse d'usinage par laser selon l'une des revendications précédentes, **caractérisée en ce qu'**un blindage pour le rayonnement laser est disposé du côté intérieur de l'isolation électrique (4) tournée vers le rayonnement laser.

4. Buse d'usinage par laser selon la revendication 3, **caractérisée en ce que** le blindage est réalisé par un manchon intérieur (5) ou par une métallisation.

5. Buse d'usinage par laser selon la revendication 3 ou 4, **caractérisée en ce que** le blindage est en métal.

6. Buse d'usinage par laser selon l'une des revendications précédentes, **caractérisée en ce que** l'isolation électrique (4) est insérable par complémentarité de formes dans la buse d'usinage par laser (1).

7. Buse d'usinage par laser selon l'une des revendications précédentes, **caractérisée en ce que** le blindage (5) est insérable par complémentarité de formes du côté intérieur de l'isolation électrique (4) dans la buse d'usinage par laser (1).
